# EUROPÄISCHE PATENTSCHRIFT

(11) **EP 0 355 869 B1**
(45) Veröffentlichungstag und Bekanntmachung des Hinweises auf die Patenterteilung: **22.05.1996**
(21) Anmeldenummer: 89119200.7
(22) Anmeldetag: 13.11.1986
(51) Int. Cl.: B01D 17/02, C02F 1/40, E03F 5/16

(54) **Leichtflüssigkeitsabscheider**
Light liquids separator
Séparateur de liquides légers

(30) Priorität: 13.12.1985 DE 8535037 U
(43) Veröffentlichungstag der Anmeldung: 28.02.1990
(62) Teilanmeldung aus: 86115761.8
(73) Patentinhaber: PASSAVANT-WERKE AG, D-65322 Aarbergen 7 (DE)
(72) Erfinder: Weiler, Walter, Dipl.-Ing., D-6252 Diez (DE); Middelhaufe, Axel, Dipl.-Ing., D-6252 Diez (DE); Sehr, Gerhard, D-5429 Allendorf (DE)

(56) Entgegenhaltungen:
- EP-A- 0 069 885
- AT-B- 347 870
- DE-A- 3 403 718
- FR-A- 2 322 833

## Beschreibung

Die Erfindung betrifft einen Leichtflüssigkeitsabscheider üblicher Bauart, d.h. mit einer im wesentlichen horizontal durchströmten Beruhigungskammer, einer dem oberen Zulauf nachgeordneten Tauchwand bzw. Umlenkarmatur und einem in Bodennähe angeordneten Reinwasserablauf. Bei derartigen Abscheidern ist die Aufenthaltszeit bzw. die Durchströmgeschwindigkeit für den Abscheidegrad maßgebend, weil Öltröpfchen unterhalb einer gewissen Größe während der Aufenthaltszeit nicht zur Wasseroberfläche der Beruhigungskammer aufsteigen können.

Es wurde bereits vorgeschlagen (DE-A-34 03 718), dem oberen Zulauf in die Beruhigungskammer eine den Impuls des Zulaufstroms vernichtende und diesen im wesentlichen über den ganzen Strömungsquerschnitt aufspreizende Netz- oder Gitterstruktur nachzuordnen, die somit die den Zulaufstrom bei den herkömmlichen Bauformen nach unten umlenkende Einlaufarmatur ersetzt. Durch die Spreizung des Zulaufstroms werden Abscheidegrade erreicht, die noch weit über den von der DIN 1999 vorgegebenen Werten liegen.

Bei diesen bekannten Abscheidern mit einer impulsvernichtenden Einlaufgitterstruktur ist im oberen Bereich der Struktur ein schmales Trennblech vorgesehen, das einerseits den Zulaufstrom von der bereits abgeschiedenen Leichtflüssigkeitsschicht fernhält und andererseits ein Zurückfließen dieser Schicht in den Zulauf verhindern soll.

Die Aufgabe, bei Abscheidern üblicher Bauart, d.h.. mit Einlauftauchwand bzw. -armatur, gleich gute Abscheidegrade zu erzielen, wird gemäß der Erfindung dadurch gelöst, daß der Tauchwand bzw. Umlenkarmatur ein eine Netz- oder Gitterstruktur aufweisender Strömungsgleichrichter zugeordnet ist, der die Form eines den bodennahen Reinwasser-Auslauf umgebenden Hohlzylinders hat, der mit seiner Unterkante gegen den Reinwasser-Auslauf abgedichtet ist. Erstaunlicherweise werden die Abscheideergebnisse nicht schlechter, obwohl der durch die Tauchwand verringerte nutzbare Querschnitt der Beruhigungskammer schlechtere Ergebnisse erwarten ließ. Offenbar wird aber der Zulaufstrom hinter der Tauchwand ausreichend nach oben gespreizt, so daß der Kammerquerschnitt doch voll genutzt werden kann. Außerdem wurde beobachtet, daß die Gitterstruktur, wenn sie eine gewisse räumliche Mindestdicke hat, auch koaleszierend auf die angeschwemmten Mikrotropfen wirkt.

Da die Gitterstruktur einen gewissen Abstand von der Tauchwand hat, kann in dem Raum, der zwischen Tauchwand und Gitterstruktur entsteht, bereits die leicht aufschwimmende Leichtflüssigkeit aufsteigen, die sich zum Teil schon in der Einlaufarmatur abgetrennt hat.

Die hohlzylinderförmige Gitterstruktur besteht vorteilhafterweise aus offenporigem Schaumstoff, der eine gewisse Eigensteife besitzt. Die Herausnehmbarkeit zwecks Reinigung oder Austausch des Hohlzylinders wird erleichtert, wenn das Formstück von einem Drahtgitter gehalten oder eingefaßt wird, das oben einen Griff aufweist.

Der Hohlzylinder wird von oben dicht auf die bodennahe Auslauföffnung des Reinwassers gesetzt. Sofern der Abscheider einen auslaufseitigen Schwimmerverschluß aufweist, kann der Kohlzylinder oder der ihn tragende Gitterkorb gleichzeitig den Führungskäfig für diesen Schwimmerverschluß bilden. Mit dem Warten oder Austauschen des Hohlzylinders kann dann auch gleich der Schwimmerverschluß überprüft werden. Da der Wartungsschacht über dem Schwimmerverschluß liegen muß, sind die Wartungsarbeiten an der Gitterstruktur leicht durchführbar.

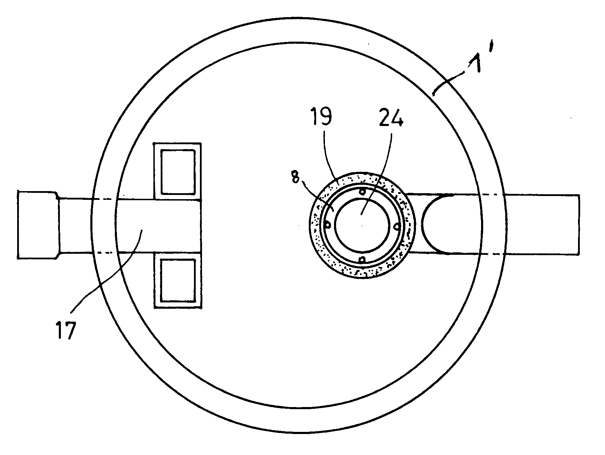

Die Erfindung wird anhand des in der Zeichnung dargestellten Ausführungsbeispiels nachfolgend noch näher erläutert.

Ein in der Draufsicht zylindrisches Abscheiderbecken 1′ hat eine sich nach unten in zwei Öffnungen verzweigende Einlaufarmatur 17. Ein als Hohlzylinder ausgebildeter Strömungsgleichrichter 19 liegt oberhalb der Reinwasser-Auslauföffnung 24 und ist mit seiner Unterkante gegen diese abgedichtet. Der relativ große Abstand des Strömungsgleichrichters vom Zulauf steht dem Prinzip der Gleichrichtung nicht entgegen: die Gleichrichtung beginnt wegen des Druckverlustes im Gleichrichter bereits weit vor dem Gleichrichter.

## Patentansprüche

1. Leichtflüssigkeitsabscheider mit einer im wesentlichen horizontal durchströmten Beruhigungskammer (1'), einer dem oberen Zulauf nachgeordneten, den Zulaufstrom nach unten umlenkenden Tauchwand bzw. Umlenkarmatur (17) und einem in Bodennähe angeordneten Reinwasserablauf (24), **dadurch gekennzeichnet**, daß der Tauchwand bzw. der Umlenkarmatur (17) ein eine Netz- oder Gitterstruktur aufweisender Strömungsgleichrichter (19) zugeordnet ist, der die Form eines den bodennahen Reinwasser-Auslauf (24) umgebenden Hohlzylinders hat, der mit seiner Unterkante gegen den Reinwasser-Auslauf abgedichtet ist.

2. Leichtflüssigkeitsabscheider nach Anspruch 1, **dadurch gekennzeichnet**, daß der Hohlzylinder (19) innen von einem Drahtgitter oder - käfig (8) gestützt ist, der gleichzeitig die Führung für das den Reinwasser-Ablauf (24) verschließende Schwimmerventil ist.

## Claims

1. Separator for low viscosity liquids comprising a stilling chamber (1') with mainly horizontal flow, a baffle or other deflecting means (17) located behind the upper inlet and diverting the incoming flow downward, and a lower clear water outlet (24), close to the bottom, **characterized in that** the baffle or other deflecting means (17) is located opposite of a flow straightener (19) with a metal grid structure, which is formed as a hollow cylinder enclosing the lower clear water outlet (24) and sealed at its lower edge against the clear water outlet.

2. Separator for low viscosity liquids according to claim 1, **characterized in that** the inside of the hollow cylinder (19) is supported by a metal grid-type cage (8) which, at the same time, serves as guide for the float valve closing the clear water outlet (24).

## Revendications

1. Séparateur à liquides très fluides constitué par une chambre tranquillisante (1') dans laquelle le courant d'eau est principalement horizontal et par une paroi plongeuse ou un dispositif déflecteur (17) situé dérrière l'entrée d'eau supérieure, dirigeant le courant d'eau d'amenée vers le bas et par une sortie d'eau clarifiée inférieure (24) à proximité du fond, **caractérizé en ce que** la paroi plongeuse ou le dispositif déflecteur (17) se trouve en face d'un redresseur de courant d'eau (19), ayant une structure réticulaire de fil métallique, en forme d'un cylindre creux autour de la sortie d'eau clarifiée (24) dont le bord inférieur est rendu étanche contre la sortie d'eau clarifiée.

2. Séparateur à liquides très fluides selon revendication 1, **caractérizé en ce que** l'intérieur du cylindre creux (19) est supporté par une structure réticulaire de fil métallique ou cage en treillis (8) laquelle sert au même temps de guidage pour la soupape à flotteur obturant la sortie d'eau clarifiée (24).
